# EUROPEAN PATENT SPECIFICATION

(11) **EP 1 789 166 B1**
(45) Date of publication and mention of the grant of the patent: **18.05.2011**
(21) Application number: 05794007.4
(22) Date of filing: 31.08.2005
(51) Int. Cl.: B01D 69/12, B01D 69/02

(54) **COMPOSITE MEMBRANES OF HIGH HOMOGENEITY**
VERBUNDMEMBRANE MIT HOHER HOMOGENITÄT
MEMBRANES COMPOSITES DE FORTE HOMOGENEITE

(30) Priority: 09.09.2004 US 608358 P
(43) Date of publication of application: 30.05.2007
(73) Proprietor: E.I. DU PONT DE NEMOURS AND COMPANY, Wilmington, DE 19898 (US)
(72) Inventor: O'BRIEN, William, George, Newark, DE 19711 (US)
(74) Representative: Matthews, Derek Peter
(86) International application number: PCT/US2005/031163
(87) International publication number: WO 2006/031456

(56) References cited:
- US-A- 3 953 566
- US-A- 4 552 631
- US-A- 5 082 472
- US-A- 6 130 175
- US-B1- 6 177 533
- US-B1- 6 410 084

## Description

### FIELD OF THE INVENTION

This invention relates to composite membranes and more particularly relates to composite membranes suitable for use as electrochemical cell and gas separation membranes.

### BACKGROUND OF THE INVENTION

Nonporous membranes are barriers to flow, but are selectively permeable to certain species by diffusion. For example, a membrane separating two fluids prevents gross or indiscriminate mixing of the fluids, but may permit preferential passage of one or more components of the fluids. Flux is a measure of the rate of passage, and selectivity is a measure of the discrimination shown by the membrane toward the.various species that can pass through it. Certain polymers are used in membranes for gas separation, and in electrochemical applications such as fuel cells and electrolysis. In the latter case the polymers are ionomers, i.e., polymers with ion-exchange capacity.

Membranes may be in the form of polymer films, in which case they must have, in addition to properties suitable for acting as a barrier and for transport, sufficient strength to resist tearing or puncturing, or excessive stretching such as would be caused by differential pressure across the membrane. Alternatively, composite membranes are used in which the polymer (referred to as the matrix polymer in a composite membrane) is supported on a substrate. In composites, no more matrix polymer need be used than necessary for effective barrier and transport properties. Strength is provide by the supporting substrate. Examples of supporting substrates are woven or nonwoven fabric, or expanded polytetrafluoroethylene (ePTFE, available commercially, for example as Tetratex® or Gore-Tex®). These substrates are porous and are laminated to polymer, or coated on the surface or impregnated throughout the substrate with polymer.

Membranes made by treatment of commercial ePTFE with polymer dispersions or solutions to impregnate the ePTFE with matrix polymer, such as in US-A-5, 082, 472, show significant haze, even after repeated applications. The haze is believed to be caused by regions of the ePTFE which are not coated, pores of which are not completely filled by the matrix polymer, and/or parts of the PTFE that did not expand uniformly, leaving particles large enough to scatter light, creating the haze. Species passing through such incompletely tilleg or coated hazy membrane, such as gas molecules or atoms in semipermeable membranes used in gas separation, or ions in electrochemical membranes, are obstructed in their passage by these uncoated or unfilled regions of the membrane. The useful area of the membrane is effectively reduced because of this and flux is reduced. In addition, unfilled pores have the potential to expand and contract as temperature and pressure change, leading to internal stresses in the membrane and separation of the elements of the ePTFE from the polymer in the pores. Such changes further reduce membrane transport efficiency.

Improved composite membranes could be made if substrates can be found that can be coated and filled more completely with matrix polymer, thereby minimizing obstacles to species as they pass through the membrane. A measure of this improved coating and filling would be reduction or elimination of haze in the composite membrane.

### SUMMARY OF THE INVENTION

The present invention provides a non-porous composite membrane comprised of expanded polytetrafluoroethylene and matrix polymer that is impregnated in said expanded polytetrafluoroethylene, said expanded polytetrafluoroethylene being made from polytetrafluoroethylene fine powder having a standard specific gravity (SSG) of no more than about 2.16, a break strength of at least 5.5 lb force (24.5 N), and a stress relaxation time of at least 500 sec, said composite membrane having a haze of less than 25%/25 µm measured according to ASTM D1003.

A haze of this low value means that the surfaces of the ePTFE are well-coated and the pores in the ePTFE are substantially completely filled with matrix polymer, i.e. there are substantially no unfilled pores remaining in the ePTFE in the composite membrane capable of contributing significantly to haze. Compared to hazy membranes in which the pattern of the ePTFE is visible, this preferred membrane of the present invention makes possible a higher flux of species through the membrane.

### DETAILED DESCRIPTION

It has now been discovered that expanded polytetrafluoroethylene made from tetrafluoroethylene (TFE) fine powder having a standard specific gravity (SSG) of no more than about 2.16, a break strength of at least about 5.5 lb force (24.5 N), and a stress relaxation time of at least about 500 sec, when employed in a composite membrane, can produce a composite membrane of very low haze. As stated above, commercial ePTFE gives hazy membranes even when coated multiple times with matrix polymer. Haze is an approximately linear function of thickness in the range of 0.5 to about 5 mils (12-125 µm). In membranes in accordance with the invention, haze is less than about 25%/25 µm, preferably less than about 20%/25 µm, more preferably less than about 15%/25 µm, and most preferably less than about 10%/25 µm.

Expanded polytetrafluoroethylene (ePTFE) for use in the composite membrane in accordance with the present invention is made according to the well known methods described in U.S. Patent Nos. 3,953,566 and 3,962,153 including the paste extrusion of polytetrafluoroethylene (PTFE) fine powder and subsequent stretching to produce ePTFE. For the composite membranes in accordance with the present invention, the (PTFE) fine powder employed has a standard specific gravity (SSG) of no more than about 2.16, a break strength of at least about 5.5 lb force (24.5 N), and a stress relaxation time of at least about 500 sec. These properties of the (PTFE) fine powder and their measurements are described in U.S. Patent No. 6,177,533. Suitable PTFE fine powder of this type can be made according the method disclosed in U.S. Patent No. 6,136,933. Comparative Example C which discloses a PTFE fine powder having an SSG of 2.159, a break strength of 2.54 kg force (5.6 lb force, 24.9 N), and a stress relaxation time of 751 sec. PTFE fine powder of this type is sold by the DuPont Company, Wilmington, Delaware, U.S.A., under the tradename T-601-A.

Membranes useful for electrochemical cells such as chloralkali electrolyzers or fuel cells, can be made by using as matrix polymer ion-exchange polymers known in the electrochemical art. Preferably, ion-exchange polymer is a fluoropolymer, and more preferably is perfluorinated, i.e., a perfluorinated ionomer (perfluoro ion-exchange polymer). The ion exchange groups on the ion exchange polymer are preferably sulfonic acid or carboxylic acid groups. Perfluorinated ionomer with sulfonic acid groups include, for example, polymers disclosed in U.S. Patent No. 3,282,875 and in U.S. Patent Nos. 4,358,545 and 4,940,525 and perfluorinated ionomer with carboxylic acid groups include, for example, polymers disclosed in U.S. Patent No. 4,552,631. Suitable perfluorinated ionomer resin with sulfonic acid groups in dispersion form in an aqueous alcohol (water/ethanol/propanol) medium is available as Nafion® solution, from Aldrich Chemical Co., Milwaukee Wisconsin USA, and the DuPont Company, Wilmington Delaware, USA. The equivalent weight of suitable perfluorinated ionomer is about 800-1300 (grams of polymer in the hydrogen ion (proton) form that will neutralize one equivalent of sodium hydroxide), preferably about 850-1200, more preferably about 850-1100, most preferably about 900-1050.

For use in making composite membranes in accordance with the invention for use in electrochemical cells using the perfluorinated ionomer in dispersion form and coating processes described hereinafter, the perfluorinated ionomer is preferably about 5-20 wt% of the dispersion (percent solids), more preferably about 5 to 15 wt%, most preferably about 5 to 10 wt%. The viscosity of the dispersions is preferably in the range of about 50 to 200 mPa·s. The dispersion of perfluorinated ionomer preferably contains less than about 10 wt% water, more preferably less than about 5 wt%, even more preferably less than about 4 wt %, and most preferably water is in the range of about 2.5 wt% to about 0.5 wt%. The alcoholic component of the dispersion preferably should have a boiling point at atmospheric pressure of at least about that of n-butanol and not greater than about that of n-octanol. Preferably, the alcoholic component should be selected from the butanols, pentanols, and hexanols, including mixtures of these, the choice being made to accommodate coating line speeds and drying conditions, including humidity. Glycols, preferably ethylene glycol, may be added to control drying rate. Glycol should not exceed about 20 wt% of the total alcohol content, preferably no more than about 15 wt%, and more preferably no more than about 10 wt%. The aqueous alcohol solvents of commercially available dispersions can be replaced with desired solvents using a rotary evaporator.

For making membranes useful as semipermeable membranes in gas separations, matrix polymers, preferably amorphous polymers, and more preferably amorphous fluoropolymers, and most preferably ring-containing amorphous fluoropolymers, are used in solution form. An example of amorphous fluoropolymer is a copolymer of tetrafluoroethylene (TFE) and hexafluoropropylene (HFP) that is 50 wt% HFP. This polymer is soluble in a variety of fluorocarbon solvents such as FC-40 (Fluorinert electronic liquid sold by 3M Industrial Chemicals Division (St. Paul Minnesota USA), thought to be substantially perfluoro(tributylamine)), FC-75 (Fluorinert Electronic Liquid, sold by 3M Industrial Chemicals Products Division, thought to be substantially perfluoro(2-butyltetrahydrofuran)), or hexafluorobenzene. The polymer and its solutions are disclosed in U.S. Patent No. 5,663,255, Examples 53 and 57. Examples of ring-containing amorphous fluoropolymers include Teflon® AF polymers (DuPont Company, Wilmington Delaware USA), such as Teflon® AF 1600S2, a solution in FC-40 of copolymer of TFE and perfluoro-2,2-dimethyl-1,3-dioxole (PDD) having an glass transition temperature (Tg) of 160°C. The preferred viscosity for Teflon® AF solutions is about 5 to 1000 mPa·s. This is about 1.5 to 12 wt% solids.

Coatings which result in impregnation of the ePTFE with matrix polymer may be applied by dipping, spraying, drawdown, or by other methods known in the art, followed by drying to remove solvent and, for some polymers in dispersion form, heating sufficiently to coalesce dispersion particles. Depending upon solution solids and the thickness of the ePTFE, several coatings may be needed to get the desired loading of polymer per unit area of membrane. For small scale coating with control over the amount of solution applied, laboratory-scale drawdown equipment is convenient. Industry Tech (Oldsmar Florida USA) offers "laboratory drawdown sampling boards" for controlled coating with wire-wound rods. Paul N. Gardner Co., Inc (Pompano Beach Florida USA) offers wet-film applicators ("8-Path") with a variety of fixed clearances.

### EXAMPLES

ePTFE for comparative purposes is obtained from Donaldson Company (Ivyland Pennsylvania USA) as Tetratex® 3109. ePTFE for making composite membrane according to this invention is made as disclosed in U.S. Patent Nos. 3,953,566 and 3,962,153 using PTFE fine powder made as disclosed in U.S. Patent No. 6,136,933, Comparative Example C. Suppliers typically specify nominal thickness, but thickness is measured before use from scanning electron micrographs (SEM) of the cross section and by micrometer, taking care not to crush the ePTFE. Both the nominal thickness and the measured values are reported herein.

ePTFE is coated by applying solution first to one side, drying at temperatures and times dependent upon the solvent used in the matrix polymer dispersion or solution, and applying dispersion or solution to the other side, and drying. The wet-film thickness applied is estimated from the weight of polymer applied, knowing the percent solids of the coating solution, and the coating solution density.

A commercial Nafion® dispersion, SE-10072, approximately 10% solids, about 9:1 water: alcohol dispersion is used. The equivalent weight of the perfluorinated ionomer in SE-10072 is 990. Using a rotary evaporator, the aqueous alcohol solvent is replaced with n-butanol and ethylene glycol to make an 10.8 wt% solids solution of 90:10 butanol:glycol with 1.3 wt% residual water, having a viscosity of 41 cps (41 mPa·s).

Teflon® AF 1601 is a commercially available (DuPont) amorphous fluoropolymer having a glass transition temperature (Tg) of 160°C and is available as solid polymer or as a solution in fluorocarbon solvent. In the Example AF is dissolved in perfluorooctane (composition 85% perfluorooctane; 10% perfluorooctyl ethylene, 5% perfluorohexyl ethylene) to make a 3 wt% solution and a 6 wt% solution.

Haze is measured on the Gardner Haze-gard Plus, Catalog No. 4725, made by BYK-Gardner, Columbia MD USA according to ASTM D1003. Illuminant CIE-C is used. Three measurements are taken and reported as the mean plus or minus (±) the standard deviation.

### Control Example 1

Tetratex® 3109 ePTFE, nominally 0.5 mils (12 µm) thick, 0.4 mils (10 µm) thick as measured by scanning electron micrograph (SEM) and micrometer, with stated maximum pore size of 7 µm is used. 2 inch (51 cm) diameter discs are coated. Discs weigh 29.9 mg, with a standard deviation of 1.3 mg. A 172 µm wet coating of the 10.8% solids Nafion® dispersion described above is applied to the bottom and then the top of the disc of ePTFE, drying between coating steps. The coated ePTFE is dried at 40°C for 1.4 min, then 60°C for 1.4 min, and finally 80°C for 1.4 min. Final dried total thickness is 15.25 µm. In examining the cross-section of the coated ePTFE by SEM it is seen that the ePTFE is thinner after coating than before, indicating shrinkage of the ePTFE as the coating solution dries and decreases in volume.

Much white material and haze is seen on visual inspection of the coated Tetratex. Haze is measured as 48.7±5.74% (79.8%/25 µm).

### Example 2

ePTFE for use in a composite membranes made according to this invention is described above. This ePTFE is nominally 8 to 10 µm thick, in the 0.2 mil (5 µm) to 0.4 mil (10 µm) range as arrived at from SEM measurements. The ePTFE is coated following the procedure of Control Example 1. The initial wet coating thickness is 150 µm. Coated membrane thickness is 15 µm. No white material or haze is seen on visual inspection. Haze is measured as 4.18±0.37% (6.97%/25 µm), much lower than the haze found in Control Example 1. Given that the source of haze is believed to be incompletely or uncoated regions, unfilled pores, and/or inhomogeneities in the polymer, this Example shows the superior nature of ePTFE used in Example 1, which after coating has no visible material remaining in the composite membrane to interfere with transport through the membrane or to serve as a source of stress when temperatures or pressures change.

### Example 3

Example 2 is repeated using the 3 wt% solids Teflon@ AF 1600 solution in FC-40. The composite membrane is clear by visual inspection. Haze measurement gives results similar to that of Example 2.

## Claims

1. A non-porous composite membrane comprised of expanded polytetrafluoroethylene and matrix polymer that is impregnated in said expanded polytetrafluoroethylene, said expanded polytetrafluoroethylene being made from polytetrafluoroethylene fine powder having a standard specific gravity (SSG) of no more than about 2.16, a break strength of at least 5.5 lb force (24.5 N), and a stress relaxation time of at least 500 sec, said composite membrane having a haze of less than 25%/25 µm measured according to ASTM D1003.

2. The composite membrane of claim 1 wherein said matrix polymer is ion exchange polymer.

3. The composite membrane of claim 2 wherein said ion exchange polymer is a fluoropolymer.

4. The composite membrane of claim 1 wherein said matrix polymer is suitable for forming semipermeable membranes.

5. The composite membrane of claim 1 wherein said matrix polymer is amorphous polymer.

6. The composite membrane of claim 5 where said amorphous polymer is fluoropolymer.

7. A semipermeable membrane comprised of a composite membrane claim 1.

8. An electrochemical cell membrane comprised of a composite membrane of claim 1.

## Patentansprüche

1. Nichtporöse Verbundmembran, bestehend aus expandiertem Polytetrafluorethylen und Matrixpolymer, das in dem expandierten Polytetrafluorethylen imprägniert ist, wobei das expandierte Polytetrafluorethylen aus feinem Pulver von Polytetrafluorethylen mit einem standardmäßigen spezifischen Gewicht (SSG) von nicht mehr als etwa 2,16, einer Bruchfestigkeit von mindestens 5,5 lb force (24,5 N) und einer Spannungsrelaxationszeit von mindestens 500 s hergestellt ist, wobei die Verbundmembran eine Trübung von weniger als 25%/25 µm, gemessen entsprechend ASTM D1003, hat.

2. Verbundmembran nach Anspruch 1, wobei das Matrixpolymer Ionenaustauschpolymer ist.

3. Verbundmembran nach Anspruch 2, wobei das Ionenaustauschpolymer ein Fluorpolyrmer ist.

4. Verbundmembran nach Anspruch 1, wobei das Matrixpolymer zum Erzeugen von semipermeablen Membranen geeignet ist.

5. Verbundmembran nach Anspruch 1, wobei das Matrixpolymer amorphes Polymer ist.

6. Verbundmembran nach Anspruch 5, wobei das amorphe Polymer Fluorpolymer ist.

7. Semipermeable Membran, bestehend aus einer Verbundmembran nach Anspruch 1.

8. Membran einer elektrochemischen Zelle, bestehend aus einer Verbundmembran nach Anspruch 1.

## Revendications

1. Membrane composite non poreuse composée de polytétrafluoroéthylène expansé et d'une matrice polymère qui est imprégnée dans ledit polytétrafluoroéthylène expansé, ledit polytétrafluoroéthylène expansé étant fait avec de la poudre fine de polytétrafluoroéthylène ayant une densité standard (SSG) de pas plus d'environ 2,16, une résistance à la rupture d'au moins 5,5 livres-force (24,5 N) et un temps de relaxation en contrainte d'au moins 500 secondes, ladite membrane composite ayant un voile de moins de 25%/25 µm mesuré conformément à ASTM D1003.

2. Membrane composite selon la revendication 1, dans laquelle ladite matrice polymère est un polymère échangeur d'ions.

3. Membrane composite selon la revendication 2, dans laquelle ledit polymère échangeur d'ions est un fluoropolymère.

4. Membrane composite selon la revendication 1, dans laquelle ladite matrice polymère convient à la formation de membranes semi-perméables.

5. Membrane composite selon la revendication 1, dans laquelle ladite matrice polymère est un polymère amorphe.

6. Membrane composite selon la revendication 5, dans laquelle ledit polymère amorphe est un fluoropolymère.

7. Membrane semi-perméable composée d'une membrane composite selon la revendication 1.

8. Membrane de cellule électrochimique composée d'une membrane composite selon la revendication 1.
